# EUROPÄISCHE PATENTSCHRIFT

(11) **EP 4 426 602 B1**
(45) Veröffentlichungstag und Bekanntmachung des Hinweises auf die Patenterteilung: **03.06.2026**
(21) Anmeldenummer: 22812600.9
(22) Anmeldetag: 02.11.2022
(51) Int. Cl.: B62J 3/04

(54) **GLOCKE FÜR EINEN FAHRRADLENKER**
BELL FOR A BICYCLE HANDLEBAR
SONNETTE POUR GUIDON DE VÉLO

(30) Priorität: 02.11.2021 DE 102021128451; 01.08.2022 DE 102022119236
(43) Veröffentlichungstag der Anmeldung: 11.09.2024
(73) Patentinhaber: MPR GmbH & Co. KG, 95615 Marktredwitz (DE)
(72) Erfinder: PÜRNER, Marcus, 95615 Marktredwitz (DE)
(74) Vertreter: Friderichs, Gunther
(86) Internationale Anmeldenummer: PCT/EP2022/080509
(87) Internationale Veröffentlichungsnummer: WO 2023/078901

(56) Entgegenhaltungen:
- CN-U- 207 292 224
- CN-Y- 2 627 618

## Beschreibung

### Gebiet der Erfindung

Die Erfindung betrifft eine Glocke, welche insbesondere zur Anbringung an einem stangenförmigen Fahrradlenker ausgebildet ist. Auch für andere stangenförmige Lenker, wie z.B. bei Tretrollern, kann die Glocke verwendet werden.

### Hintergrund der Erfindung

Fahrräder, zu denen im Sinne der Erfindung auch solche mit einem elektrischen Hilfsantrieb zählen, müssen zum sicheren Betrieb im Straßenverkehr eine Glocke oder eine Klingel umfassen.

Eine Glocke umfasst einen Klangkörper, welcher durch einmalige Betätigung mit einem Schlägel in eine Schwingung versetzt wird und so einen deutlich wahrnehmbaren und hinreichend lauten Ton abgeben kann, um andere Verkehrsteilnehmer zu warnen.

Die Offenlegungsschrift EP 3 199 436 A zeigt eine derartige Glocke, die auf einen stangenförmigen Fahrradlenker geklemmt werden kann.

Bei der in diesem Dokument beschriebenen Glocke handelt es sich um eine Ausführungsform, bei welcher sich der Klangkörper zumindest abschnittsweise ringförmig um die Klemme und damit auch um den Lenker herum erstreckt.

Gegenüber Glocken, bei denen sich der Klangkörper von der Klemme ausgehend radial nach oben erstreckt, wird so eine besonders kompakte Bauweise ermöglicht.

Um ein möglichst freies Schwingen des Klangkörpers zu ermöglichen, ist der Klangkörper bei dieser Ausführungsform auf zwei Spiralfedern gelagert. Stifte innerhalb der Spiralfedern, welche sich bis in eine Ausnehmung des Klangkörpers erstrecken, sowie ein weiterer Stift, um den keine Feder angeordnet ist, sollen ein Ablösen des Klangkörpers bei mechanischen Belastungen verhindern.

Es hat sich aber in der Praxis gezeigt, dass genau diese Funktion oft nicht hinreichend erfüllt wird. So kann sich der Klangkörper unerwünscht weit von der Klemme wegbewegen und dabei die Federn beschädigen oder sogar sich ablösen und verloren gehen.

Weiter hat sich herausgestellt, dass es, insbesondere, wenn der Schlägel fest betätigt wird und/oder wenn die Federn leicht beschädigt sind, bei einer Betätigung der Glocke zu einem Kontakt zwischen dem Stift und der darum liegenden Feder kommt. Hierdurch wird der Klang der Glocke beeinträchtigt, insbesondere kann diese sodann derart leise sein, dass diese für eine Teilnahme am Straßenverkehr nicht mehr geeignet ist.

Weiter verursacht die Lagerung des Klangkörpers an zwei Stellen eine verhältnismäßig hohe Dämpfung.

### Fahrradglocken sind zudem aus den Dokumenten CN 2 627 618 Y und CN 207 292 224 U bekannt.

### Aufgabe der Erfindung

Der Erfindung liegt demgegenüber die Aufgabe zugrunde, die genannten Nachteile des Standes der Technik zumindest zu reduzieren.

### Zusammenfassung der Erfindung

Die Aufgabe der Erfindung wird durch eine Glocke für einen Fahrradlenker nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Glocke für einen Fahrradlenker.

Diese umfasst eine am Lenker anbringbare Klemme.

Die Klemme ist vorzugsweise aus Kunststoff, insbesondere aus einem Polyoxymethylen oder Polyamid, ausgebildet.

Vorzugsweise kann die Klemme mittels einer Schraube am stangenförmigen Lenker festgeklemmt werden.

Gemäß einer weiteren Ausführungsform der Erfindung hat die Klemme einen auf einen Klemmgriff abgestimmten Durchmesser und Form und kann so gleichzeitig zur Befestigung des Klemmgriffs verwendet werden.

Um die Klemme erstreckt sich ein Klangkörper. Der Klangkörper besteht vorzugsweise aus einem Metall, beispielsweise aus einer Aluminium, Magnesium und Silizium umfassenden Legierung oder Messing.

Vorzugsweise ist der Klangkörper derart ausgebildet, dass er einen Schalldruck von mindestens 85 dB erzeugt (nach DIN ISO 7636:1986-02)

Der Klangkörper nimmt einen ringförmigen Abschnitt um die Klemme ein. Der Klangkörper erstreckt sich also zumindest abschnittsweise um die Klemme herum, wobei dieser, um frei schwingen zu können, von der Klemme beabstandet ist.

Gemäß der Erfindung ist der Klangkörper an einer einzigen Stelle mit der Klemme verbunden.

Erfindungsgemäß ist der Klangkörper über eine einzige Feder mit der Klemme verbunden. Die Feder sitzt vorzugsweise in etwa mittig bezogen auf den Umfangswinkel des Klangkörpers.

Es hat sich herausgestellt, dass durch eine Lagerung an nur einer Stelle die durch die Lagerung in das System eingebrachte Dämpfung gegenüber einer Lagerung an zwei Stellen erheblich reduziert wird. Verglichen mit einem an zwei Stellen gelagerten Klangkörper kann die Glocke daher lauter sein und heller klingen. Dies erhöht die Sicherheit.

Bei einer bevorzugten Ausführungsform der Erfindung ist die Feder als Blattfeder ausgebildet.

Insbesondere kann die Feder einen U-förmigen Abschnitt aufweisen. Der U-förmige Abschnitt kann, bezogen auf die Schenkel des U-förmigen Abschnitts, quer zur Glocke, also zur Seite hin geöffnet, angeordnet sein. So lässt sich auf kompaktem Bauraum innerhalb eines Spalts zwischen Klangkörper und Klemme eine Lagerung mit geringer Dämpfung bereitstellen. Gleichzeitig ist der Aufbau der Glocke besonders einfach.

Die Feder kann mit dem Klangkörper und/oder mit der Klemme beispielsweise verschraubt oder verklebt sein.

Insbesondere kann die Feder mit dem Klangkörper verschraubt sein.

Bei einer Ausführungsform ist ein Schenkel der Feder in einen Kanal der Klemme oder des Klangkörpers eingesteckt. Insbesondere ist die Klemme aus Kunststoff ausgebildet und umfasst einen Kanal, in welcher ein Schenkel der Blattfeder eingesteckt ist. Der Kanal kann beispielsweise durch die als Spritzgussteil ausgebildete Klemme direkt beim Spritzen mit eingebracht werden.

Der in den Kanal eingeschobene Schenkel kann ein verdicktes Kopfstück aufweisen. Das verdickte Kopfstück verhindert ein Herausrutschen der Feder aus dem Kanal.

Bei einer Weiterbildung der Erfindung ist zwischen dem Klangkörper und der Glocke eine Abziehsicherung angeordnet. Unter einer Abziehsicherung im Sinne der Erfindung wird ein Bauelement bzw. eine Baugruppe verstanden, die verhindert, dass der Klangkörper von der Klemme heruntergezogen werden kann bzw. die verhindert, dass der Klangkörper so weit abgezogen wird, dass die Feder verformt wird.

Die Abziehsicherung kann insbesondere als ein mit der Klemme verbundener Stift ausgebildet sein, welcher durch eine Öffnung des Klangkörpers geführt ist. Die Öffnung des Klangkörpers hat einen größeren Durchmesser als der Stift.

Die Abziehsicherung ist vorzugsweise derart ausgebildet, dass die sich gegenüberliegenden Bauteile der Abziehsicherung auf Klangkörper und Klemme nicht berühren. Der Klangkörper wird somit ausschließlich auf der Feder gelagert und kann frei auf der Feder schwingen, ohne dass sich die Bauteile der Abziehsicherung dabei berühren.

Erst wenn entgegen dem bestimmungsgemäßen Gebrauch der Glocke an dem Klangkörper mit Gewalt beispielsweise gezogen wird, berühren sich die Bauteile der Abziehsicherung. Insbesondere kommt der Stift an der Öffnung des Klangkörpers zur Anlage und ein weiteres Abziehen des Klangkörpers ist somit blockiert.

Die Abziehsicherung kann beispielsweise im Bereich der Feder angeordnet sein. Insbesondere kann die Abziehsicherung beispielsweise in Form des Stiftes durch eine Ausnehmung oder ein Durchgangsloch der Feder geführt sein.

Die Positionierung der Abziehsicherung im Bereich der Feder ermöglicht zum einen eine kompakte Ausgestaltung. Zum anderen ist die Abziehsicherung an dem Ort, an dem die Gefahr einer Beschädigung am größten ist, nämlich an der Feder, angeordnet.

Gemäß einer nicht beanspruchten Ausführung ist der Klangkörper mittels zumindest zwei Schraubenfedern auf der Klemme gelagert, wobei die Schraubenfedern zumindest abschnittsweise zwischen einer Oberseite der Klemme bis zu einer Unterseite des Klangkörpers allein den Raum, den sie umschließen, einnehmen.

Gemäß einem ersten wesentlichen Aspekt der Erfindung befindet sich also in der Feder kein Bauelement, gegen das die Feder anstoßen könnte, insbesondere kein Stift, wie im eingangs beschriebenen Stand der Technik.

Unter der Unterseite des Klangkörpers wird die der Klemme gegenüberliegende Fläche des Klangkörpers verstanden. Ausnehmungen, wie beispielsweise Bohrungen für die Federn etc., zählen nicht zur Unterseite im Sinne der Erfindung.

Dementsprechend wird die Oberseite der Klemme durch die dem Klangkörper gegenüberliegende Seite der Klemme gebildet, wobei ebenfalls Ausnehmungen, wie beispielsweise Bohrungen zur Aufnahme der Federn, nicht zur Oberseite im Sinne der Erfindung gehören.

Weiter ist gemäß einer nicht beanspruchten Ausführungform an einer Stelle zwischen den beiden Schraubenfedern, insbesondere bezogen auf den Umfang in etwa mittig zwischen den Schraubenfedern, ein Eingriffelement an der Klemme vorgesehen, welches in dem Raum zwischen der Oberseite und der Unterseite des Klangkörpers in ein komplementär ausgestaltetes Eingriffelement des Klangkörpers greift. Die sich gegenüberstehenden Wände der Eingriffelemente sind dabei voneinander durch einen Spalt beabstandet.

Die Eingriffelemente können, wie es gemäß einer Ausführungsform vorgesehen ist, ein Gelenk bilden, welches Klangkörper und Klemme miteinander verbindet.

Das Gelenk ist insbesondere als Drehgelenk ausgebildet, welches eine Drehachse aufweist, die zwischen dem Klangkörper und der Klemme parallel zu einer Mittelachse der Klemme verläuft.

Der Klangkörper ist so um die Drehachse herum drehbar und durch die Drehachse gegen Herabziehen gesichert.

Vorzugsweise wird aber das Drehgelenk wiederum durch zwei Eingriffelemente gebildet, welche voneinander beabstandet sind.

Insbesondere kann eine Bohrung in einem Eingriffelement des Klangkörpers größer sein als ein Stift, welcher mit der Klemme verbunden ist. So ist zwischen dem Stift und der Innenseite der Bohrung ein Spalt ausgebildet.

Der geschlagene Klangkörper kann so frei schwingen, grundsätzlich, ohne dass er den Stift berührt.

Ansonsten sichert aber das Gelenk den Klangkörper derart, dass auf einen Führungsstift in den Federn verzichtet werden kann.

Bei den Eingriffelementen kann es sich alternativ um einen Stift handeln, welcher in eine Hülse greift.

Dadurch, dass die beiden Eingriffelemente, also insbesondere Stift und Hülse, zumindest abschnittsweise in dem Zwischenraum zwischen Unterseite des Klangkörpers und Oberseite der Klemme ineinandergreifen, wird die Wirkung der Eingriffelemente verbessert.

Die Erfindung sieht also vor, das Führen von Klangkörper und Klemme zueinander von der federnden Aufhängung zu entkoppeln.

Hierdurch kann insbesondere erreicht werden, dass die Federn beim Betätigen der Glocke nicht gegen ein Bauteil zum Führen, wie beispielsweise einen Stift, stoßen.

So sind im Bereich der Federn auch größere Lagetoleranzen des Klangkörpers gegenüber der Klemme zueinander möglich.

Zum anderen wird gemäß der Erfindung auch der Raum zwischen dem Klangkörper und der Klemme zur Anordnung eines hierfür vorgesehenen Führungsbauteils ausgenutzt, was wiederum die Glocke stabiler macht und insbesondere dazu führt, dass sich der Klangkörper bei mechanischer Beanspruchung schwerer ablöst, als es nach dem Stand der Technik der Fall ist.

Vorzugsweise greifen die Eingriffelemente über eine Höhe von 0,5 bis 3 mm, besonders bevorzugt von 1 bis 2 mm, in dem Zwischenraum zwischen Klangkörper und Klemme ineinander.

Das Eingriffelement der Klemme kann insbesondere als sich radial nach außen erstreckender Stift ausgebildet sein.

Das Eingriffelement des Klangkörpers kann insbesondere als Bohrung ausgebildet sein, beispielsweise als Bohrung, die sich in einen nach innen ragenden Fortsatz des Klangkörpers erstreckt.

Unter einer Bohrung im Sinne der Erfindung wird ein zylindrisches Loch verstanden. Der Begriff "Bohrung" betrifft mithin nicht das Fertigungsverfahren, mit dem diese eingebracht wurde.

So kann ein Eingriffelement, insbesondere das Eingriffelement des Klangkörpers, insbesondere auch als Hülse ausgebildet sein, welche sich von der Unterseite des Klangkörpers ausgehend nach innen erstreckt.

Gemäß einer Ausführungsform der Erfindung schließen die Mittelachsen der Schraubenfedern einen Winkel von 80 bis 300°, vorzugsweise von 110 bis 150° ein.

Der Klangkörper kann einen Umfang von 180 bis 360°, vorzugsweise von 200 bis 240°, einnehmen.

Gemäß einem weiteren Aspekt der Erfindung betrifft die Erfindung eine Glocke für einen Stangenlenker, insbesondere mit einem oder mehreren vorstehend beschriebenen Merkmalen. Die Glocke umfasst eine am Lenker anbringbare Klemme, wobei sich um die Klemme ein Klangkörper erstreckt, der einen ringförmigen Abschnitt um die Klemme einnimmt.

Der Klangkörper ist federnd, insbesondere mittels einer oder zwei Federn auf der Klemme gelagert.

Weiter ist der Klangkörper mittels eines federnd gelagerten Schlägels in Schwingung versetzbar.

Gemäß diesem Aspekt der Erfindung geht der Schlägel über eine Blattfeder in die Klemme über.

Die Blattfeder ist insbesondere als gebogene Blattfeder ausgebildet und verbindet die Klemme von deren Außenseite gehend mit der Innenseite des Schlägels.

Es ist insbesondere vorgesehen, dass Klemme, Blattfeder und Schlägel zumindest im Bereich der Blattfeder aus einem einzigen Teil ausgebildet sind.

Insbesondere können Schlägel, Klemme und Blattfeder aus einem einzigen Spritzgussteil ausgebildet sein.

So lässt sich eine besonders formschöne leichte und einfach aufgebaute Glocke bereitstellen. Es genügt dabei, dass die Blattfeder aus demselben Material ausgebildet ist wie die Klemme und der Schlägel, insbesondere aus einem Polyoxymethylen oder Polyamid.

Bei einer anderen Ausführungsform ist denkbar, dass ein federndes Metallelement im Bereich der Feder in das Bauteil eingespritzt ist.

Vorzugsweise besteht aber die Blattfeder vollständig aus Kunststoff.

Die Blattfeder kann sich insbesondere angrenzend zu einem oberen Gegenhalter für die Schraube vom Festziehen der Klemme befinden.

Gemäß einem weiteren Aspekt der Erfindung betrifft die Erfindung eine Glocke für einen Fahrradlenker, welche insbesondere die vorstehend beschriebenen Merkmale sowie sowohl einzeln als auch in Kombination umfassen kann.

Die Glocke umfasst eine am Lenker anbringbare Klemme, wobei sich um die Klemme ein Klangkörper erstreckt, welcher einen ringförmigen Abschnitt um die Klemme einnimmt. In einer nicht beanspruchten Ausführung ist der Klangkörper mittels zumindest zwei Schraubenfedern auf der Klemme gelagert. Gemäß der nicht beanspruchten Ausführung sind die Schraubenfedern jeweils in eine Öse der Klemme eingehängt.

Unter einer Öse wird ein Bauteil mit einer Öffnung verstanden, welches Teil der Klemme ist und in welchem sich die Feder einhängen lässt.

Durch das Einhängen der Feder konnte auf einfache Weise eine besonders stabile Verbindung zwischen Feder und Klemme bereitgestellt werden.

Insbesondere ist vorgesehen, dass die Öse in einer Einsenkung auf der Außenseite der Klemme angeordnet ist.

Beispielsweise kann ein Ende der Schraubenfeder derart umgebogen sein, dass sich dieses radial durch die Mittelachse der Schraubenfeder erstreckt.

Dieses kann sodann in eine tangential zur Klemme verlaufende Öse (Bohrung) eingesteckt werden, bis das Ende der Feder vollständig in die Einsenkung schnappt.

So wird eine einfache Montage und eine besonders sichere Befestigung der Feder ermöglicht. Der Klangkörper kann innenseitige Einsenkungen aufweisen, in welche die Schraubenfedern greifen.

Bei einer hinreichenden Beabstandung der Schraubenfedern ist der montierte Klangkörper bereits aufgrund des Einrastens der Schraubenfedern in den Einsenkungen sowie aufgrund der Eingriffelemente hinreichend auf der Klemme fixiert. Die Federn drücken jeweils in eine andere Richtung und aufgrund der Position der Federn zueinander schnappen diese in die Ausnehmungen und fixieren so den Klangkörper.

Zusätzlich kann die Feder im Klangkörper auch durch einen Klebstoff befestigt sein. Vorzugsweise ist die Feder aber nur in die Einsenkung eingesetzt, ohne stoffschlüssig befestigt zu sein. Dies reduziert gegenüber einem Einkleben die Dämpfung durch die Feder.

Die Ösen sowie das Eingriffelement der Klemme sind vorzugsweise integraler Bestandteil der Klemme aus Kunststoff.

Dies ist insbesondere als einstückiges Kunststoffspritz-gussteil ausgebildet.

Gemäß einem weiteren Aspekt der Erfindung betrifft diese eine Glocke für einen Stangenlenker, insbesondere mit einem oder mehrerer vorstehend beschriebenen Merkmale. Diese umfasst eine am Lenker anbringbare Klemme, wobei sich um die Klemme ein Klangkörper erstreckt, der einen ringförmigen Abschnitt um die Klemme einnimmt, wobei der Klangkörper mittels zumindest zwei Schraubenfedern auf der Klemme gelagert ist.

Der Klangkörper ist mittels eines federnd gelagerten Schlägels in Schwingung versetzbar. Der Schlägel ist insbesondere auf einem Schwenklager gelagert und wird über eine Schenkelfeder von dem Klangkörper weggedrückt.

Erfindungsgemäß trifft der Schlägel beim Betätigen an seinem Wegende auf eine weitere Feder. Dies kann insbesondere eine Schraubenfeder sein, die in eine Schlägelaufnahme der Klemme eingesetzt ist.

Durch diese weitere Feder wird das Zurückschnellen des Schlägels nach dem Auftreffen auf den Klangkörper beschleunigt. Durch das schnellere Zurückschnellen wird eine größere Lautstärke erreicht, da der Schlägel schneller aus dem Bereich des schwingenden Klangkörpers wegbewegt wird.

Die Erfindung betrifft des Weiteren einen Lenkergriff, welcher als Klemmgriff ausgebildet ist und welcher mit der vorstehend beschriebenen Glocke befestigt ist.

Weiter betrifft die Erfindung ein Fahrrad, welches eine zuvor beschriebene Glocke umfasst.

### Kurzbeschreibung der Zeichnungen

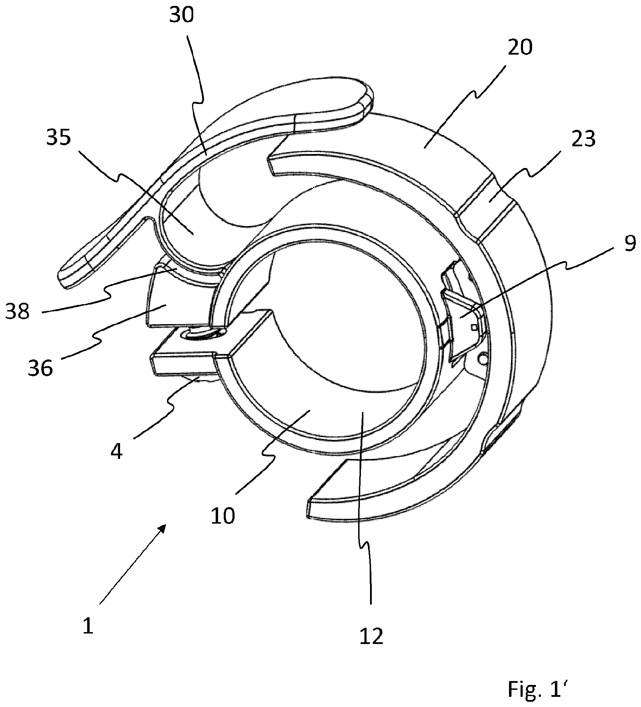

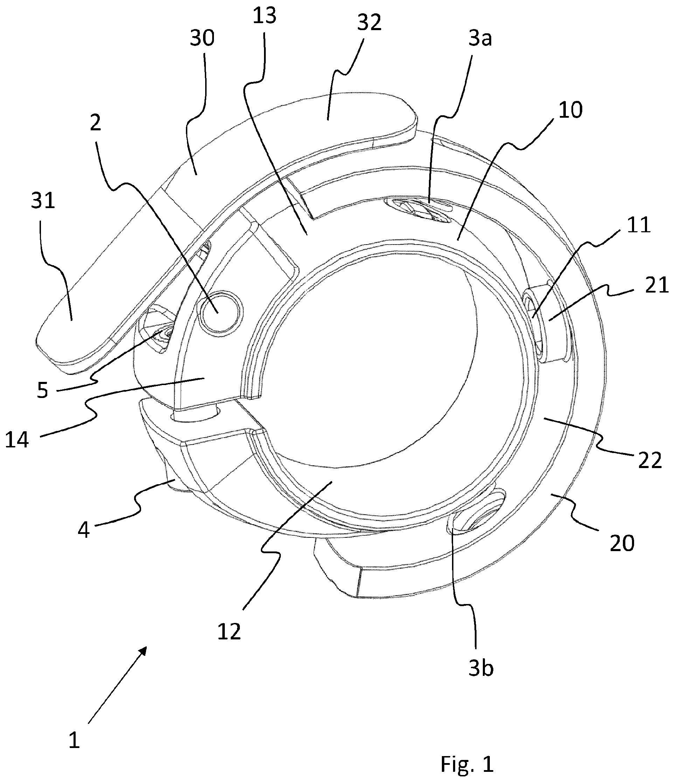

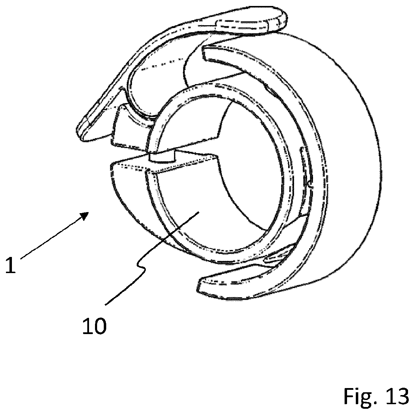

Der Gegenstand der Erfindung soll im Folgenden bezugnehmend auf Ausführungsbeispiele anhand der Zeichnungen Fig. 1' bis Fig. 13 näher erläutert werden.

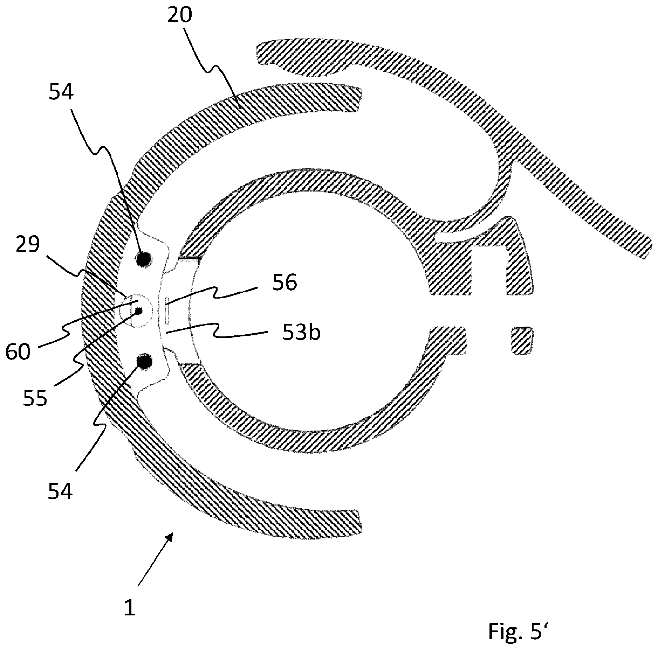

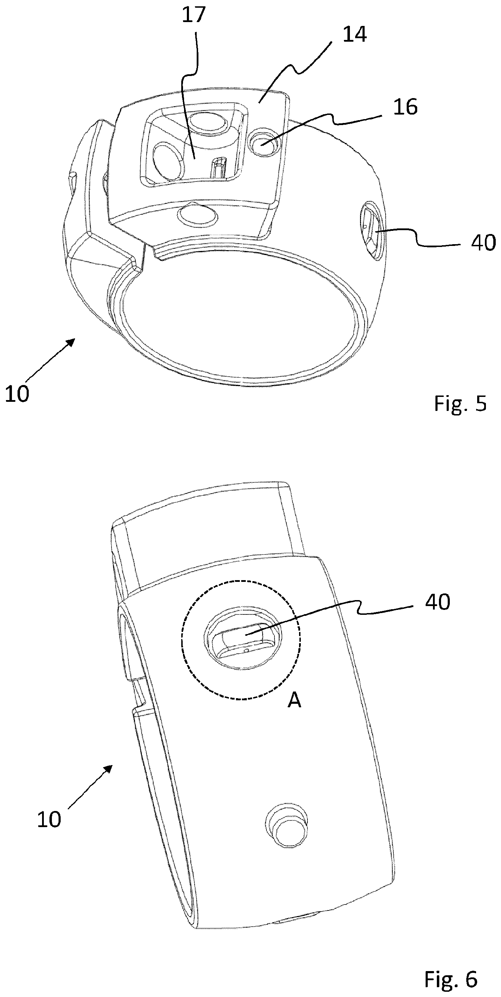

Fig. 1' bis Fig. 5' zeigen ein Ausführungsbeispiel der Erfindung gemäß vorstehend beschriebenem ersten Aspekt der Erfindung, bei welchem der Klangkörper an einer einzigen Stelle gelagert ist.
Fig. 1' ist eine perspektivische Ansicht.
Fig. 2' ist eine Explosionsdarstellung.
Fig. 3' ist eine Detailansicht der Klemme. Fig. 3a' zeigt eine alternative Ausführungsform.
Fig. 4' ist eine perspektivische Ansicht der Blattfeder. Fig. 4a' ist eine leicht modifizierte Ausführungsform.
Fig. 5' ist ein mittiger Längsschnitt.

Fig. 1 bis Fig. 10 zeigen eine Glocke gemäß einem weiteren nicht beanspruchten Aspekt

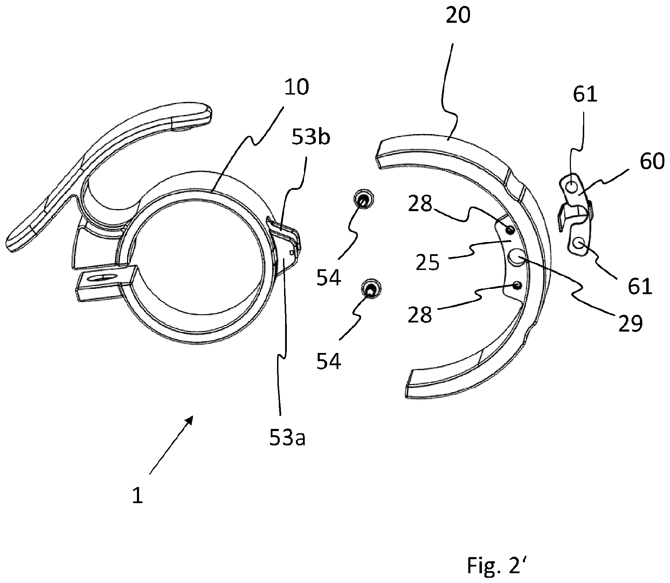

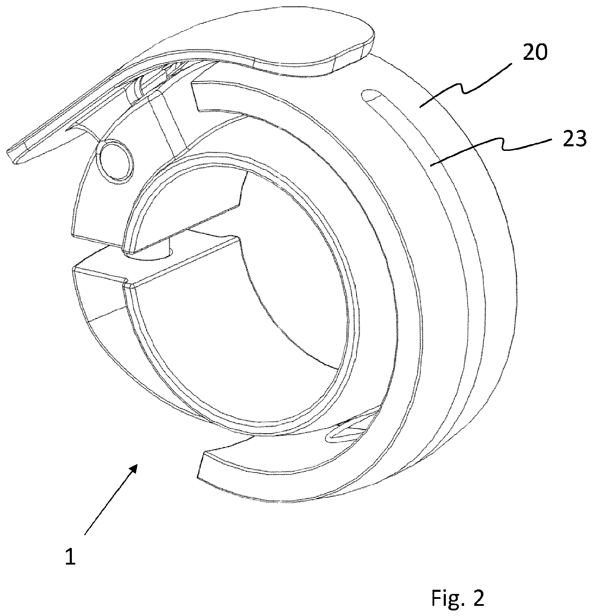

Fig. 1 und Fig. 2 sind perspektivische Ansichten dieses Ausführungsbeispiels der Erfindung.

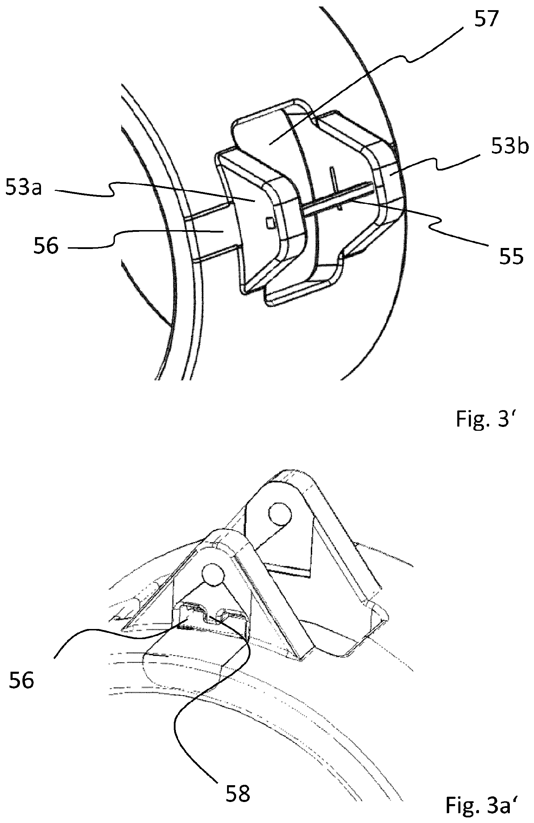

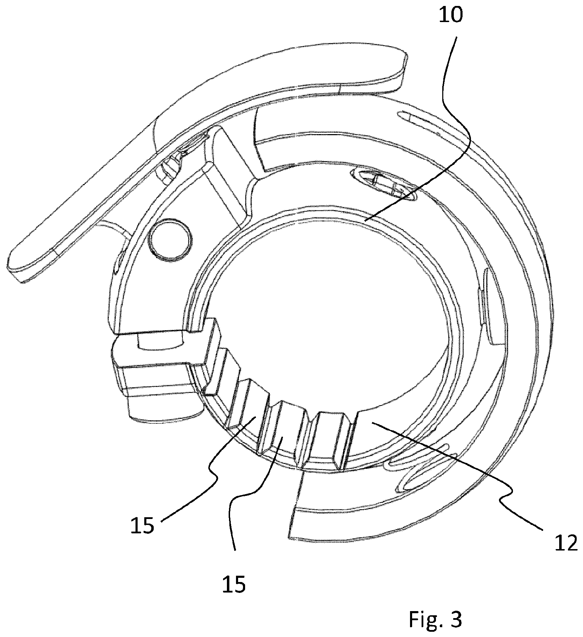

Fig. 3 ist eine perspektivische Ansicht eines alternativen Ausführungsbeispiels.

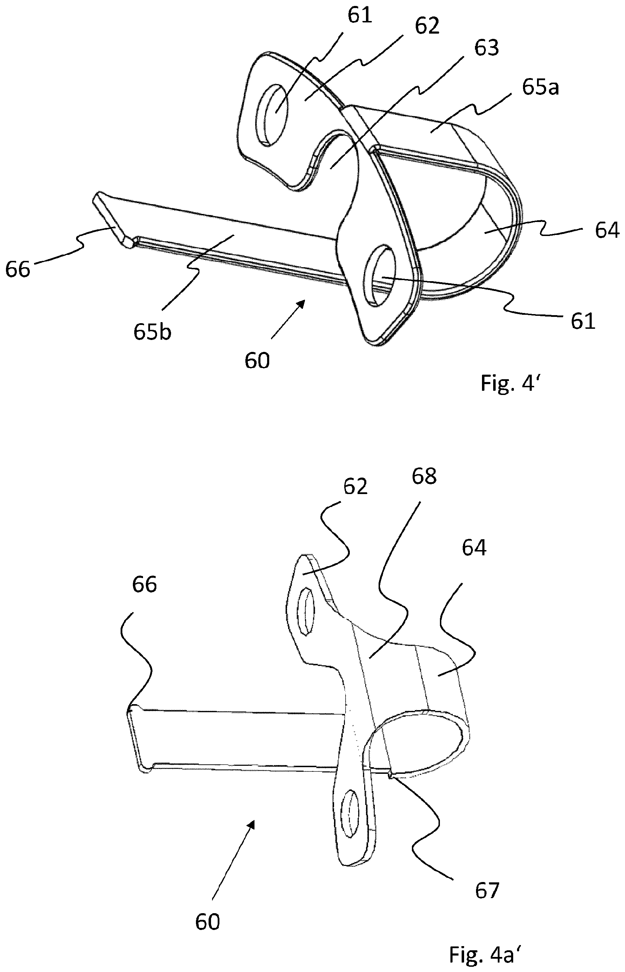

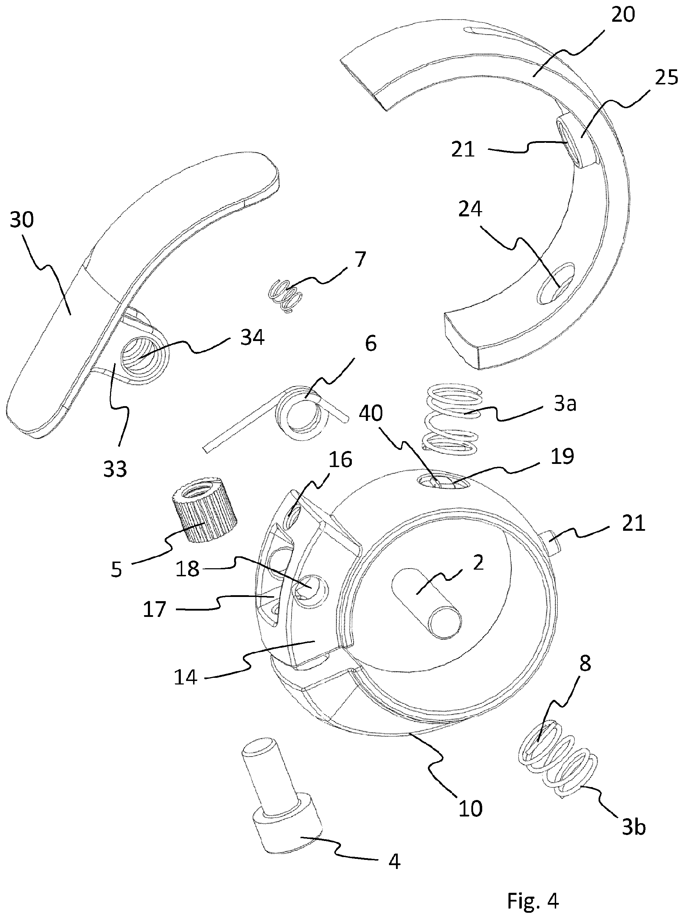

Fig. 4 ist eine Explosionsdarstellung der in Fig. 1 und Fig. 2 dargestellten Glocke.
Fig. 5 und Fig. 6 sind perspektivische Ansichten der Klemme.

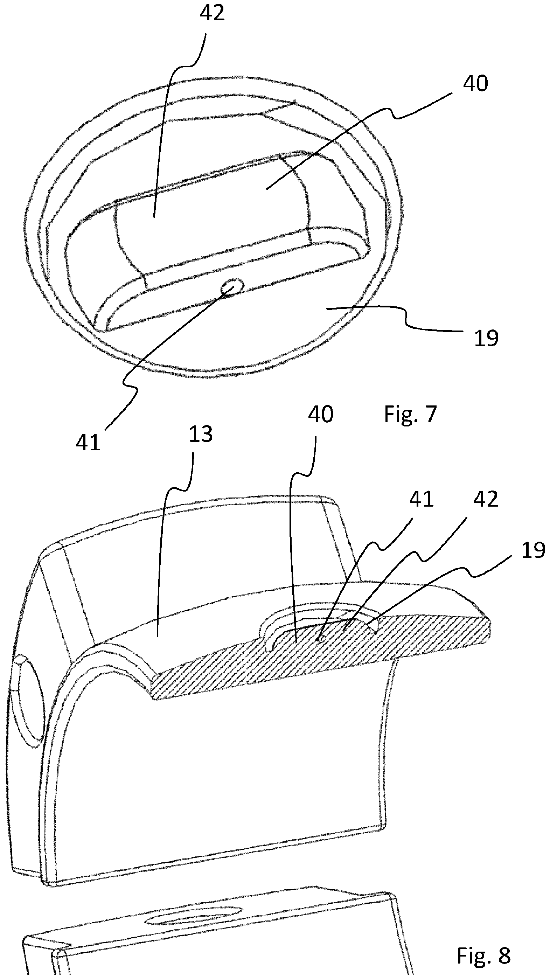

Fig. 7 ist eine Detailansicht des Bereichs A der Fig. 6.
Fig. 8 ist die Detailansicht eines Querschnitts der Klemme im Bereich der Befestigung einer Schraubenfeder.

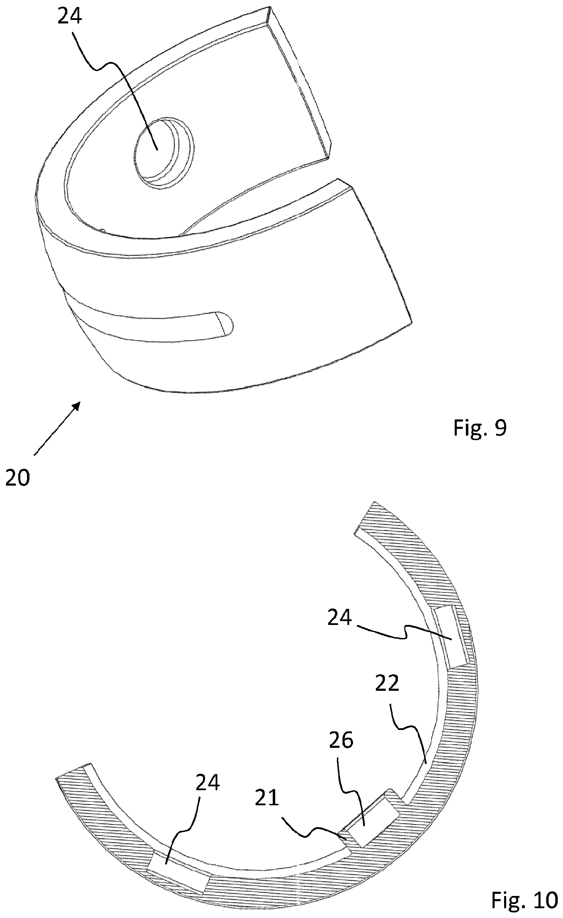

Fig. 9 ist eine perspektivische Ansicht des Klangkörpers.
Fig. 10 ist ein mittiger Längsschnitt des Klangkörpers.

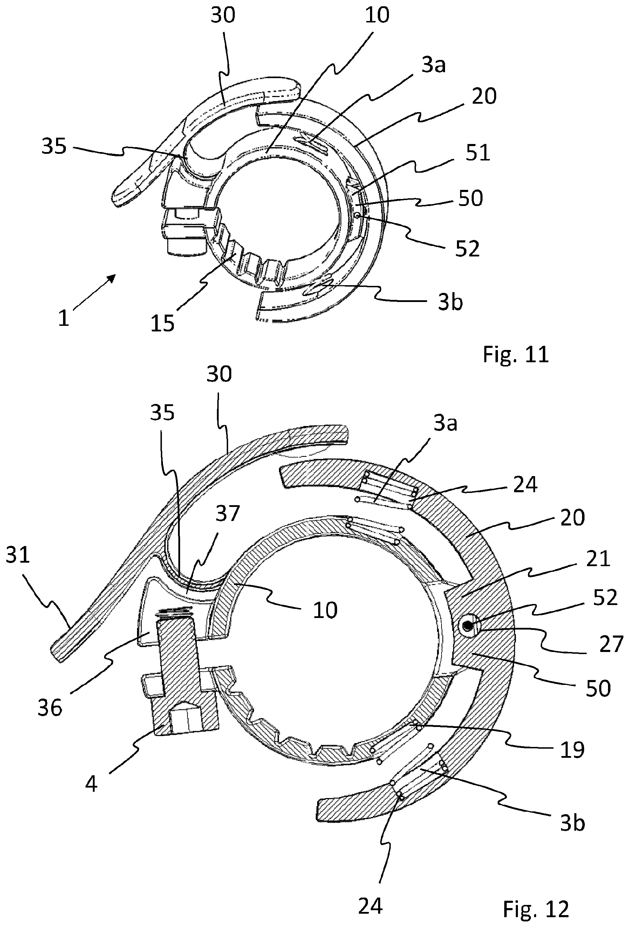

Fig. 11 bis Fig. 13 zeigen alternative Ausführungsformen eines Ausführungsbeispiels, bei welcher die Glocke ein Gelenk aufweist und der Schlägel mittels einer Blattfeder gelagert ist.

### Detaillierte Beschreibung der Zeichnungen

Bezugnehmend auf Fig. 1' bis Fig. 5' wird ein Ausführungsbeispiel gemäß dem ersten Aspekt der Erfindung erläutert, bei welchem der Klangkörper 20 der Glocke 1 an einer einzigen Stelle auf der Klemme 10 gelagert ist.

Fig. 1' ist eine perspektivische Ansicht.

Die Glocke 1 umfasst eine Klemme 10, welche an einer Lenkstange oder an einem Griff für eine Lenkstange angebracht werden kann.

Die Klemme 10 umfasst eine Klemmfläche 12, welche sich um den Lenker erstreckt.

Eine Schraube 4 ist in den Gegenhalter 36 eingedreht. Durch Festziehen der Schraube 4 kann die Glocke 1 klemmend auf dem Lenker befestigt werden.

Abschnittsweise um die Klemme 10 herum erstreckt sich ein als Ringsegment ausgebildeter Klangkörper 20. Dieser nimmt in diesem Ausführungsbeispiel einen Umfangswinkel von 160 bis 220° ein.

Der Klangkörper 20 kann im Wesentlichen die Form eines Kreiszylinderabschnitts aufweisen. In diesem Ausführungsbeispiel verfügt der Klangkörper 20 über zumindest eine quer verlaufende Nut 23. Über die Nut 23 können die Klangeigenschaften eingestellt werden. Beispielsweise kann die Eigenfrequenz und damit die Tonlage des Systems durch Materialabtrag in der Nut 23 eingestellt werden.

Der Klangkörper ist über ein einziges Lager 9 mit der Klemme 10 verbunden.

Das Lager 9 ist zwischen der Außenseite der Klemme 10 und der Innenseite des Klangkörpers 20 angeordnet.

Vorzugsweise befindet sich das Lager 9 im Wesentlichen mittig bezogen auf den Umfang des Klangkörpers 20.

Über den Schlägel 30 kann der Klangkörper 20 in Schwingung versetzt werden.

Der Schlägel 30 ist in diesem Ausführungsbeispiel (wie in dem Ausführungsbeispiel gemäß Fig. 11 bis Fig. 13) über eine Blattfeder 35 mit der Klemme 10 verbunden.

Die Blattfeder 35 ist U-förmig ausgebildet und erstreckt sich von der Unterseite des Schlägels 30 ausgehend U-förmig bis zur Außenseite der Klemme 10.

Schlägel 30, Blattfeder 35 und Klemme 10 können so monolithisch als ein einziges Kunststoffspritzgussbauteil ausgebildet sein.

Diese Bauweise ist zudem besonders kompakt und formschön.

Die offene Seite des U der Blattfeder 35 ist dabei, bezogen auf die bestimmungsgemäße Montageposition, distal ausgerichtet.

Der Gegenhalter 36 hat angrenzend an die Blattfeder 35 eine gekrümmte Fläche 38. Dies sorgt ebenfalls für eine kompakte Ausgestaltung und ist formschön.

Fig. 2' ist eine Explosionsdarstellung der Komponenten der in Fig. 1' dargestellten Glocke 1 (bis auf die Schraube der Klemme).

Die Klemme 10 umfasst die beiden Lagerböcke 53a und 53b.

Zwischen den Lagerböcken 53a, 53b ist ein Spalt angeordnet. In diesen Spalt greift im montierten Zustand ein Fortsatz 25 des Klangkörpers 20.

Der Fortsatz 25 erstreckt sich in etwa mittig von der Innenseite des Klangkörpers 20 nach innen. Der Fortsatz 25 ist plattenförmig ausgebildet.

Der Fortsatz 25 umfasst zwei Gewinde 28. Mittels der Schrauben 24 kann die Blattfeder 60 mit dem Klangkörper 20 verbunden werden.

Weiter umfasst der Fortsatz 25 ein Durchgangsloch 29. Das Durchgangsloch 29 ist Teil der Abziehsicherung. In diesem Ausführungsbeispiel befindet sich das Durchgangsloch 29 in etwa mittig am Fortsatz 25.

Fig. 3' ist eine Detaildarstellung der Klemme, und zwar des Bereichs der Lagerböcke 53a, 53b.

Durch die Lagerböcke 53a, 53b erstreckt sich ein Stift 55. Im montierten Zustand greift der Stift 55 durch das Durchgangsloch des Klangkörpers (29 in Fig. 2'). So wird eine Abziehsicherung bereitgestellt.

Der Fortsatz des Klangkörpers ragt dabei zwischen die Lagerböcke 53a, 53b.

Unter den Lagerböcken 53a, 53b hindurchgeführt ist ein Kanal 56, welcher einen Schenkel der Blattfeder aufnimmt.

Der Kanal 56 hat in diesem Ausführungsbeispiel einen in etwa rechteckigen Querschnitt.

Zwischen den Lagerböcken 53a, 53b befindet sich ein Fenster 57, in dem also die Klemme offen ist. Durch das Fenster 57 ist eine Entformung des Spritzgussteils einfacher.

Fig. 3a' zeigt eine modifizierte Ausführungsform, bei welcher der Kanal 56 einen Zapfen 58 umfasst, der in der Kanal 56 hineinragt.

Der Zapfen 58 drückt im montierten Zustand auf den eingeschobenen Schenkel der Blattfeder und verbessert so die die Fixierung der Blattfeder.

Fig. 4' ist eine perspektivische Ansicht der Blattfeder 60.

Die Blattfeder 60 hat einen U-förmigen Abschnitt 64, von welchem aus sich die beiden Schenkel 65a, 65b erstrecken. Die Schenkel 65a, 65b verlaufen in etwa parallel.

Der Schenkel 65a endet an einer quer zu dem Schenkel 65a verlaufenden Platte 62. Die Platte 62 steht in etwa senkrecht zum Schenkel 65a und ragt nach innen. Die Platte 62 umfasst die beiden Durchgangslöcher 61 für die Befestigungsschrauben.

Weiter hat die Platte 62 in diesem Ausführungsbeispiel eine mittige Ausnehmung 63. Durch die Ausnehmung 63 kann der Stift der Abziehsicherung laufen.

Der Schenkel 65b ist länger als der Schenkel 65a.

Der Schenkel 65b dient dem in Fig. 3' dargestellten Einschieben in den Kanal (56 in Fig. 3'). Der Schenkel 65b hat einen verdickten Kopf 66. Dieser ist derart breit, dass er noch mit Kraft durch den Kanal geführt werden kann, im montierten Zustand dann aber die Feder 60 gegen Herausrutschen sichert.

Fig. 4a' ist eine modifizierte Ausführungsform einer Blattfeder 60.

Diese hat auf der dem verdickten Bereich 66 gegenüberliegenden Seite einen zusätzlichen Anschlag 76 in Gestalt einer randseitigen Stufe. Dies verbessert die Positionierung der Blattfeder 60 bei der Montage.

Weiter ist ein Übergangsbereich 68 vorgesehen, in welchem sich die Breite der Feder hinter der Platte 62 sukzessive verjüngt, bis die Breite des U-förmigen Abschnitts 64 erreicht ist. Ansonsten entspricht die Ausgestaltung der Blattfeder 60 Fig. 4'.

Fig. 5' ist ein in etwa mittiger Querschnitt der Glocke 1. Dargestellt ist der Stift 55. Der Stift 55 dient als Abziehsicherung und kann einen beliebigen, insbesondere polygonförmigen Querschnitt aufweisen.

Das Durchgangsloch 29 des Klangkörpers 20 hat einen größeren Durchmesser. Dadurch berührt der Stift 55 den Klangkörper 20 nicht, wenn die Glocke erklingt.

Über die Schrauben 54 ist der Klangkörper 20 mit der Blattfeder 60 verbunden.

Der gegenüberliegende Schenkel der Blattfeder ist in den Kanal 56 eingeschoben, welcher unten entlang der Lagerböcke 53b verläuft.

Die in Fig. 1' bis Fig. 5' dargestellte Glocke ist einfach aufgebaut und hat aufgrund der Lagerung des Klangkörpers 20 an lediglich einer einzigen Stelle einen verbesserten Klang.

Fig. 1 zeigt in einer perspektivischen Ansicht ein Ausführungsbeispiel einer Glocke 1 gemäß einer anderen Ausführungsform. Die hier dargestellte Glocke 1 ist derart dimensioniert, dass diese als Klemme für einen Lenkergriff (nicht dargestellt) ausgebildet ist.

Die Glocke 1 umfasst eine Klemme 10, welche zur klemmenden Befestigung an der Lenkerstange ausgebildet ist.

Die Klemme 10 umfasst eine Klemmfläche 12, welche am Lenker anliegt.

Zum Befestigen kann die Klemme 10 mit der Schraube 4 angezogen werden.

Die Schraube 4 greift in die Mutter 5 und zieht die Klemme 10, welche in diesem Ausführungsbeispiel aus Kunststoff ausgebildet ist, zusammen.

Um die Klemme 12 herum erstreckt sich der ringförmige Klangkörper 20 aus Metall.

Der ringförmige Klangkörper 20 ist mit seiner Innenseite 22 von der Außenseite 13 der Klemme 10 beabstandet.

In einer nicht beanspruchten Ausführung ist der Klangkörper 20 über die beiden Schraubenfedern 3a, 3b federnd auf der Klemme 10 gelagert.

Die Schraubenfedern 3a, 3b schließen in diesem Ausführungsbeispiel einen Winkel von 110 bis 150° ein.

So ist der Klangkörper 20 bereits durch die Schraubenfedern 3a, 3b derart gelagert, dass dieser schwingen kann und nicht herabfällt.

Bei mechanischer Belastung könnte der Klangkörper 20 aber leicht abgerissen oder zur Seite hin weggedreht werden.

Daher umfasst die Glocke 1 bezogen auf den Umfang mittig zwischen den beiden Schraubenfedern 3a, 3b ein Führungselement, welches aus einem Eingriffelement 11 der Klemme 10 sowie einem Eingriffelement 21 des Klangkörpers 20 gebildet wird.

In diesem Ausführungsbeispiel ist das Eingriffelement 11 der Klemme 10 als Stift ausgebildet, welcher in das als Hülse ausgebildete Eingriffelement 21 des Klangkörpers 20 greift.

Die Eingriffelemente 11, 21 sind durch einen Spalt voneinander beabstandet und berühren sich grundsätzlich nicht.

Nur bei starker mechanischer Beanspruchung, beispielsweise wenn der Klangkörper 20 unsachgemäß zur Seite hin gedreht wird, stoßen die Eingriffelemente 11, 21 aneinander und verhindern so, dass sich die Schraubenfedern 3a, 3b verbiegen.

Sobald der Klangkörper 20 wieder losgelassen wird, wird dieser durch die Schraubenfedern 3a, 3b in der hier dargestellten Position zentriert.

Um den Klangkörper 20 klingen zu lassen, umfasst die Glocke 1 den Schlägel 30.

Der Schlägel 30 umfasst ein Vorderteil 32, welches nach dessen Betätigung auf den Klangkörper 20 aufschlägt.

Das Vorderteil 32 kann, insbesondere dann, wenn der Schlägel 30 aus Kunststoff ausgebildet ist, einen Einsatz aus einem anderen Material, wie beispielsweise Metall, umfassen, welcher gegen den Klangkörper 20 schlägt.

Der Schlägel 30 ist federnd gelagert.

Die Achse dieser Lagerung wird durch den Bolzen 2 gebildet, auf dem der Schlägel 30 an der Klemme 10 gelagert ist.

Der Schlägel 30 hat des Weiteren einen Griffbereich 31. Dadurch, dass der Benutzer den Griffbereich 31 in Richtung Klemme 10 drückt, federt das Vorderteil 32 des Schlägels 30 nach oben.

Beim Loslassen federt der Schlägel 30 zurück und das Vorderteil schlägt auf den Klangkörper 20 auf, so dass ein Ton abgegeben wird.

Fig. 2 ist eine weitere perspektivische Ansicht der in Fig. 1 dargestellten Glocke 1. Der Klangkörper 20 umfasst zumindest abschnittsweise an seiner Außenseite eine umlaufende Nut 23.

Über die Nut 23 können die akustischen Eigenschaften, wie Klang und Höhe des Tons, eingestellt werden.

Fig. 3 ist eine perspektivische Ansicht eines alternativen Ausführungsbeispiels der Erfindung. Im Unterschied zu der in Fig. 1 und Fig. 2 gezeigten Glocke ist diese zur direkten Anbringung an der Lenkerstange und nicht an einem Klemmgriff ausgebildet.

Im Unterschied zu der zuvor dargestellten Ausführungsform lässt sich die Klemme 10 aufbiegen, um diese am Lenker anbringen zu können, ohne den Lenkergriff abzunehmen. Hierzu umfasst die Klemme 10 eine zumindest abschnittsweise mehrere Segmente 15, welche sich gegeneinander falten lassen.

Von der sonstigen Ausgestaltung und Funktion her entspricht dieses Ausführungsbeispiel aber Fig. 1 und Fig. 2.

Fig. 4 ist eine Explosionsdarstellung der in Fig. 1 und Fig. 2 dargestellten Glocke.

Zu erkennen ist, dass die Klemme 10, welche den stiftförmigen Fortsatz 21 umfasst, zur Anbringung der Schraubenfedern 3a, 3b jeweils eine Öse 40 umfasst.

Die Öse 40, deren Ausgestaltung in der Folge noch näher erläutert wird, ist in einer an den Querschnitt der jeweiligen Spiralfeder 3a, 3b angepassten Einsenkung 19 angeordnet. Festgezogen wird die Klemme mit der Schraube 4, welche in das Gewinde 5 greift.

In diesem Ausführungsbeispiel besteht das Gewinde 5 aus einem Metalleinsatz, welcher in die ansonsten aus Kunststoff bestehende Klemme 10 eingesetzt ist.

Zur Lagerung des Schlägels 30 umfasst die Klemme eine Schlägelaufnahme 14 mit zwei seitlichen Durchgangslöchern 18.

Der Schlägel 30 wird mit den gegenüberliegenden Lagern 33, welche jeweils ein Durchgangsloch aufweisen, in die Ausnehmung 17 der Schlägelaufnahme 14 eingesetzt.

So kommt der Schlägel 30 an der Schlägelaufnahme 14 zur Anlage.

Fixiert wird der Schlägel 30 mit dem Bolzen 2.

Um den Schlägel 30 gegen eine Federvorspannung zurück- bzw. vom Klangkörper 20 abzuheben, sitzt die Schenkelfeder 6 auf dem Bolzen 2.

Weiter umfasst die Schlägelaufnahme 14 eine sich radial erstreckende Bohrung 16, in der eine weitere Feder 7 sitzt. Die weitere Feder 7 lässt den Schlägel 30 nach dem Auftreffen auf den Klangkörper 20 schneller zurückschnellen. So wird eine größere Lautstärke erreicht. Diese beträgt vorzugsweise mehr als 85 dB.

In einer nicht beanspruchten Ausführung umfassen die Schraubenfedern 3a, 3b jeweils ein nach innen zur Achse gebogenes Ende 8. Mit dem Ende 8 werden die Schraubenfedern 3a, 3b in die Öse 40 eingesetzt und dort eingeklebt.

Der Klangkörper 20 umfasst die Bohrungen bzw. Einsenkungen 24 für die Schraubenfedern 3a, 3b sowie das dazwischen angeordnete Eingriffelement 21, welches als hülsenförmiger Fortsatz 25 ausgebildet ist.

Im montierten Zustand greifen die Schraubenfedern 3a, 3b in die Bohrungen 24.

Der Stift 21 greift in den hülsenförmigen Fortsatz 25, ist aber sowohl radial als auch axial von dem Eingriffelement 21 beabstandet.

Fig. 5 ist eine perspektivische Ansicht der Klemme 10. Die Schlägelaufnahme 14 umfasst ein Gehäuse, welches radial nach außen springt und welches die Aufnahme 17 für die Lager des Schlägels aufweist.

In Richtung Klangkörper ist die Oberseite der Schlägelaufnahme 14 mit der Bohrung 16 für die weitere Feder versehen.

Weiter zu erkennen ist eine Öse 40 für eine der Schraubenfedern.

Fig. 6 ist eine weitere perspektivische Ansicht der Klemme 10, in welcher die Öse 40 dargestellt ist.

Fig. 7 ist eine Detailansicht des Bereichs A der Fig. 6.

Dargestellt ist die Öse 40. Diese umfasst einen Block 42 als Gehäuse.

Der Block 42 ist in einer Einsenkung 19 der Klemme angeordnet.

Die Bohrung 41 für das Ende der Feder befindet sich unten am Block 42, der so die Öse 40 ausbildet.

Bezogen auf die Fahrtrichtung ist die Bohrung 41 in Längsrichtung ausgerichtet.

Zur Montage wird die Feder mit ihrem Ende (8 in Fig. 3) voran in die Bohrung 41 eingesteckt.

Am Ende des Montagevorgangs der Feder schnappt der zylindrische Federkörper in die Einsenkung 19 ein.

Fig. 8 ist eine Detaildarstellung eines Querschnitts der Klemme im Bereich der Öse 40.

Zu erkennen ist, dass bei diesem Ausführungsbeispiel der Block 42 nicht über die Außenseite 13 der Klemme hinausragt.

Vielmehr sitzt der Block 42 vollständig in der Ausnehmung 19.

Der Block 42 hat einen länglichen Querschnitt.

Zwischen der Schmalseite des Blocks 42 und dem Rand der Einsenkung 19 ist eine Nut ausgebildet, die hinreichend breit ist, um die Schraubenfeder aufzunehmen.

Die längliche Form des Blocks 42 erleichtert das Einfädeln des Endes der Feder in die Bohrung 41.

Fig. 9 ist eine perspektivische Ansicht des nicht beanspruchten Klangkörpers 20.

In dieser Ansicht ist insbesondere die Bohrung 24 zu erkennen, in welcher eine Schraubenfeder eingesetzt ist, vorzugsweise ohne stoffschlüssig befestigt zu sein.

Fig. 10 ist ein mittiger Längsschnitt des Klangkörpers.

Die Bohrungen 24 haben vorzugsweise eine Tiefe von 1/3 bis 2/3 der Dicke des Klangkörpers an dieser Stelle.

Die Bohrung 26, durch welche das hülsenförmige Eingriffelemente 21 definiert ist, befindet sich bei diesem Ausführungsbeispiel von der Innenseite 22 des Klangkörpers ausgehend.

Die Eingriffelemente von Klemme und Klangkörper überschneiden sich mithin nur im

Bereich des Spalts zwischen den beiden Bauelementen. Es hat sich herausgestellt, dass insbesondere hierdurch die Stabilität der Glocke deutlich verbessert werden konnte.

Fig. 11 ist eine perspektivische Ansicht eines weiteren nicht beanspruchten Ausführungsbeispiels einer Glocke 1.

Diese kann, bis auf die nachfolgend beschriebenen Unterschiede, wie die anderen vorstehend beschriebenen Ausführungsformen ausgebildet sein.

Insbesondere kann die Klemme 10, wie hier dargestellt, teils aus Segmenten 15 ausgebildet sein.

Auch bei diesem nicht beanspruchten Ausführungsbeispiel ist der Klangkörper 20 mittels zwei Schraubenfedern 3a, 3b federnd auf der Klemme 10 gelagert.

Ein Unterschied besteht darin, dass die Eingriffelemente von Klemme 10 und Klangkörper 20 ein Gelenk 50, nämlich ein Drehgelenk, bilden.

Hierzu ragen aus der Oberseite der Klemme zwischen den Federn 3a und 3b zwei Seitenteile 51 hervor, durch die ein Stift 52 geführt ist.

Der Stift 52 bildet die Drehachse des Gelenks 50 und sichert den Klangkörper 20 gegen ein Herunterziehen.

Ein weiterer Unterschied liegt darin begründet, dass der Schlägel 30 über eine gebogene Blattfeder 35 in die Klemme 10 übergeht.

Wie in dem in etwa mittigen Querschnitt der nicht beanspruchten Ausführung gemäß Fig. 12 dargestellt, bildet die Blattfeder 35 eine U-förmige Kontur, über deren Schenkel Klemme 10 und Schlägel 30 miteinander verbunden sind. Die Basis des U ist dabei proximal ausgerichtet.

Diese Kontur geht von der Oberseite der Klemme 10 aus und verläuft in einem Bogen in Richtung der Unterseite des Schlägels 30.

Schlägel 30, Blattfeder 35 und Klemme 10 sind dabei als ein einziges Spritzgussteil ausgebildet. So ist eine besonders leichte und formschöne Gestaltung sichergestellt.

Die Blattfeder 35 ist dünner ausgebildet als der Schlägel 30 und/oder als die Klemme 10. So wird eine hinreichende Flexibilität der Blattfeder 35 bereitgestellt.

In diesem Ausführungsbeispiel ist die Blattfeder 35 über einen Spalt 37 von dem Gegenhalter 36 beabstandet, mittels dessen über die Schraube 4 die Klemme 10 zugezogen wird.

Beim Betätigen kann der Schlägel mit dem Griffbereich 31 so weit in Richtung Klemme 10 gedrückt werden, bis der Griffbereich 31 an dem Gegenlager 36 zur Anlage kommt.

So ist sichergestellt, dass die Blattfeder 35 beim Betätigen nicht überdehnt wird.

Eine Oberseite des Gegenhalters 36 kann im Wesentlichen der Kontur der Blattfeder 35 folgen, also bogenförmig ausgebildet sein.

Bei dem Gelenk ist zu erkennen, dass der Klangkörper 20 ein von seiner Innenseite in Richtung der Klemme 10 ragendes Eingriffelement 21 aufweist.

Das Eingriffelement 21 umfasst eine Bohrung 27, welche einen größeren Durchmesser als der durch die Bohrung 27 geführte Stift 52 aufweist.

So befindet sich zwischen dem Stift 52 und der Innenseite der Bohrung 27 ein Spalt. Der Spalt ermöglicht ein freies Schwingen des Klangkörpers 20.

Das Gelenk 50 dient also bei dieser Ausführungsform lediglich der festen Verbindung von Klangkörper 20 und Klemme 10 derart, dass der Klangkörper 20 nicht von der Klemme 10 heruntergezogen werden kann.

Bei der Montage werden die Federn 3a, 3b eingesetzt und sodann der Klangkörper 20 aufgesetzt und mittels des Stifts 52 gesichert.

Aufgrund des Gelenks 52 können die Bohrungen 24 sowie die Einsenkungen 19, in welchen die Schraubenfedern 3a, 3b sitzen, als zylinderförmige Sacklöcher ausgebildet sein.

Eine weitere Sicherung der Federn 3a, 3b, etwa durch Einhängen oder Einkleben, ist nicht erforderlich.

Die Federn 3a, 3b können sich zwischen Innenseite des Klangkörpers 20 und Außenseite der Klemme 10 frei durch den Raum erstrecken, insbesondere ohne, dass sich ein Führungsstift durch die Federn 3a, 3b erstreckt.

Insgesamt gesehen konnte eine einfach montierbare Glocke mit verbesserten Klangeigenschaften und mit einer besseren Stabilität bereitgestellt werden.

### Bezugszeichenliste

- 1: Glocke
- 2: Bolzen
- 3a, 3b: Schraubenfeder
- 4: Schraube
- 5: Mutter
- 6: Schenkelfeder
- 7: weitere Feder
- 8: Ende der Schraubenfeder
- 9: Lager
- 10: Klemme
- 11: Eingriffelement
- 12: Klemmfläche
- 13: Außenseite
- 14: Schlägelaufnahme
- 15: Segment
- 16: Bohrung
- 17: Ausnehmung
- 18: Durchgangsloch
- 19: Einsenkung
- 20: Klangkörper
- 21: Eingriffelement
- 22: Innenseite
- 23: Nut
- 24: Bohrung
- 25: Fortsatz
- 26: Bohrung
- 27: Bohrung
- 28: Gewinde
- 29: Durchgangsloch
- 30: Schlägel
- 31: Griffbereich
- 32: Vorderteil
- 33: Lager
- 34: Durchgangsloch
- 35: Blattfeder
- 36: Gegenhalter
- 37: Spalt
- 38: gekrümmte Fläche
- 40: Öse
- 41: Bohrung
- 42: Block
- 50: Gelenk
- 51: Seitenteil
- 52: Stift
- 53a, 53b: Lagerbock
- 54: Schraube
- 55: Stift
- 56: Kanal
- 57: Fenster
- 58: Zapfen
- 60: Blattfeder
- 61: Durchgangsloch
- 62: Platte
- 63: Ausnehmung
- 64: U-förmiger Abschnitt
- 65a, 65b: Schenkel
- 66: verdickter Kopf
- 67: Anschlag
- 68: Übergangsbereich

## Patentansprüche

1. Glocke (1) für einen Stangenlenker, insbesondere einen Fahrradlenker, umfassend eine am Lenker anbringbare Klemme (10), wobei sich um die Klemme (10) ein Klangkörper (20) erstreckt,
der einen ringförmigen Abschnitt um die Klemme (10) einnimmt, wobei
der Klangkörper (20) über eine Feder (60) mit der Klemme (10) verbunden ist, **dadurch gekennzeichnet dass** der Klangkörper (20) an einer einzigen Stelle mit der Klemme (10) verbunden ist.

2. Glocke nach dem vorstehenden Anspruch, **dadurch gekennzeichnet, dass** der Klangkörper über eine Blattfeder mit der Klemme verbunden ist.

3. Glocke nach einem der vorstehenden Ansprüche, **dadurch gekennzeichnet, dass** die Feder einen U-förmigen Abschnitt aufweisen, insbesondere einen U-förmigen Abschnitt, der zur Seite der Glocke hin geöffnet ist,
und/oder **dadurch gekennzeichnet, dass** die Feder mit dem Klangkörper und/oder mit der Klemme verschraubt oder verklebt ist,
und/oder **dadurch gekennzeichnet, dass** ein Schenkel der Feder in einen Kanal der Klemme oder des Klangkörpers eingesteckt ist.

4. Glocke nach einem der vorstehenden Ansprüche, **dadurch gekennzeichnet, dass** zwischen dem Klangkörper und der Glocke eine Abziehsicherung angeordnet ist.

5. Glocke nach dem vorstehenden Anspruch, **dadurch gekennzeichnet, dass** die Abziehsicherung als mit der Klemme verbundener Stift ausgebildet ist, der durch eine Öffnung des Klangkörpers geführt ist, wobei die Öffnung des Klangkörpers einen größeren Durchmesser als der Stift aufweist.

6. Glocke nach einem der beiden vorstehenden Ansprüche, **dadurch gekennzeichnet, dass** die Abziehsicherung im Bereich der Feder angeordnet ist, insbesondere durch eine Ausnehmung oder ein Durchgangsloch der Feder geführt ist.

7. Lenkergriff oder Fahrrad, umfassend eine Glocke nach einem der vorstehenden Ansprüche.

## Claims

1. A bell (1) for a straight handlebar, in particular a bicycle handlebar, comprising a clamp (10) attachable to the handlebar, and a sound body (20) extending around the clamp (10) and covering a ring-shaped section around the clamp (10), the sound body being connected to the clamp via a spring (60);
**characterised in that** the sound body (20) is connected to the clamp (10) at a single location.

2. The bell according to the preceding claim, **characterised in that** the sound body is connected to the clamp via a leaf spring.

3. The bell according to any one of the preceding claims,
**characterised in that** the spring has a U-shaped section, in particular a U-shaped section that is open toward the side of the bell; and/or
**characterised in that** the spring is screwed or glued to the sound body and/or to the clamp; and/or
**characterised in that** one leg of the spring extends into a passage of the clamp or of the sound body.

4. The bell according to any one of the preceding claims, **characterised in that** a pull-off prevention means is arranged between the sound body and the bell.

5. The bell according to the preceding claim, **characterised in that** the pull-off prevention means is in the form of a pin which is connected to the clamp and extends through an opening of the sound body, wherein the opening of the sound body has a larger diameter than the pin.

6. The bell according to any one of the two preceding claims, **characterised in that** the pull-off prevention means is arranged within the range of the spring, in particular extends through a recess or a through-hole of the spring.

7. A handlebar grip or bicycle, comprising a bell according to any one of the preceding claims.

## Revendications

1. Sonnette (1) pour un guidon tubulaire droit, en particulier un guidon de bicyclette, comprenant une pince (10) pouvant être fixée sur le guidon, un corps sonore (20) s'étendant autour de la pince (10) et couvrant une section annulaire autour de la pince (10), le corps sonore étant relié à la pince (10) par l'intermédiaire d'un ressort (60), **caractérisée en ce que** le corps sonore (20) est relié à la pince en un seul endroit.

2. Sonnette selon la revendication précédente, **caractérisée en ce que** le corps sonore est relié à la pince par un ressort à lame.

3. Sonnette selon l'une quelconque des revendications précédentes,
**caractérisée en ce que** le ressort présente une section en U, en particulier une section en U ouverte vers le côté de la sonnette, et/ou
**caractérisée en ce que** le ressort est vissé ou collé au corps sonore et/ou à la pince, et/ou **caractérisée en ce qu'**une branche du ressort s'étend dans un passage de la pince ou du corps sonore.

4. Sonnette selon l'une quelconque des revendications précédentes, **caractérisée en ce qu'**un moyen anti-désengagement est disposé entre le corps sonore et la sonnette.

5. Sonnette selon la revendication précédente, **caractérisée en ce que** le moyen anti-désengagement est réalisé sous la forme d'une goupille reliée à la pince et s'étendant à travers une ouverture du corps sonore, l'ouverture du corps sonore présentant un diamètre supérieur à celui de la goupille.

6. Sonnette selon l'une quelconque des deux revendications précédentes, **caractérisée en ce que** le moyen anti-désengagement est disposé dans la zone du ressort, en particulier s'étend à travers un évidement ou un trou traversant du ressort.

7. Poignée de guidon ou bicyclette, comprenant une sonnette selon l'une quelconque des revendications précédentes.
